Europäisches Patentamt

European Patent Office

Office européen des brevets

(19)

(11) Veröffentlichungsnummer: **0 394 748**
**A2**

(12) **EUROPÄISCHE PATENTANMELDUNG**

(21) Anmeldenummer: **90106862.7**

(22) Anmeldetag: **10.04.90**

(51) Int. Cl.⁵: **C01B 25/16, //C01B25/01**

(30) Priorität: **27.04.89 DE 3913853**

(43) Veröffentlichungstag der Anmeldung:
**31.10.90 Patentblatt 90/44**

(84) Benannte Vertragsstaaten:
**DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Bettermann, Gerhard, Dr.**
**Geschwister-Scholl-Strasse 4a**
**D-5042 Erftstadt(DE)**
Erfinder: **Schimmel, Günther, Dr.**
**Ehrenstrasse 16**
**D-5042 Erftstadt(DE)**
Erfinder: **Tiedemann, Jens, Dr.**
**Graf-Stauffenberg-Strasse 4**
**D-5042 Erftstadt(DE)**

(54) **Verfahren zur Aufarbeitung von Phosphorsäure.**

(57) Zur Aufarbeitung von konzentrierter, mit organischen Bestandteilen verunreinigter, vorzugsweise teilweise kondensierter Phosphorsäure vermischt man zunächst die Phosphorsäure mit feinkörnigem Sand im Gewichtsverhältnis (0,5 bis 1,5) : 1 intensiv. Dem Gemisch setzt man dann zu seiner Neutralisation soviel einer basischen, sauerstoffhaltigen Calciumverbindung unter Fortsetzung der intensiven Vermischung zu, bis eine 10 %ige wäßrige Aufschlämmung des mit der Calciumverbindung versetzten Gemisches einen pH-Wert zwischen 5 und 11 aufweist. Schließlich zerkleinert man das die Calciumverbindung enthaltende Gemisch nach seinem Abkühlen.

EP 0 394 748 A2

## Verfahren zur Aufarbeitung von Phosphorsäure

Die vorliegende Erfindung betrifft ein Verfahren zur Aufarbeitung von konzentrierter, mit organischen Bestandteilen verunreinigter, vorzugsweise teilweise kondensierter Phosphorsäure.

Aus der EP-OS 189 062 ist ein Verfahren zur Überführung von Rückständen, welche bei der Entfernung von Schwermetallen aus Naßphosphorsäure mit Dialkyldithiophosphorsäure angefallen sind und welche neben den Schwermetallen Phosphorsäure und Dialkyldithiophosphorsäure enthalten, in feste deponiefähige Produkte bekannt. Dabei werden die Rückstände mit einer solchen Menge von festem Calciumoxid oder Calciumhydroxid intensiv vermischt, daß eine 20 %ige wäßrige Suspension des entstandenen Produkts einen pH-Wert von 5 bis 12 aufweist. Die im entstandenen Produkt enthaltenen Phosphorverbindungen sind praktisch wasserunlöslich.

Nachteilig ist bei dem bekannten Verfahren, daß es nur auf solche Rückstände anwendbar ist, welche bei nur geringem Gehalt an freier Säure noch gut handhabbar sind.

Es ist Aufgabe der vorliegenden Erfindung, ein Verfahren zur Aufarbeitung von solcher Phosphorsäure anzugeben, welche wegen ihrer hohen Konzentration und wegen ihres Gehaltes an organischen Bestandteilen von hoch viskoser Konsistenz und daher schlecht handhabbar ist. Erfindungsgemäß versetzt man diese Phosphorsäure mit feinkörnigem Sand im Gewichtsverhaltnis (0,5 bis 1,5) : 1 unter intensiver Vermischung, setzt dem resultierenden Gemisch zu seiner Neutralisation soviel einer basischen, sauerstoffhaltiger Calciumverbindung unter Fortsetzung der intensiven Vermischung zu, bis eine 10 %ige wäßrige Aufschlämmung des mit der Calciumverbindung versetzten Gemisches einen pH-Wert zwischen 5 und 11 aufweist und zerkleinert das die Calciumverbindung enthaltende Gemisch nach seinem Abkühlen.

Das Verfahren gemäß der Erfindung kann weiterhin wahlweise auch noch dadurch ausgestaltet sein, daß

a) der Sand eine Korngröße von weniger als 1 mm aufweist;

b) die Korngröße des Sandes 0,3 bis 0,8 mm beträgt;

c) das Gewichtsverhältnis von Phosphorsäure zu Sand (0,9 bis 1,1) : 1 beträgt;

d) der pH-Wert der 10 %igen wäßrigen Aufschlämmung des mit der Calciumverbindung versetzten Gemisches 6 bis 8 beträgt;

e) als calciumhaltige Verbindung Calciumoxid dient;

f) als calciumhaltige Verbindung Calciumcarbonat dient;

g) die Vermischung in einem Kneter vorgenommen wird;

h) das abgekühlte, die Calciumverbindung enthaltende Gemisch in einem Kneter zerkleinert wird;

i) das abgekühlte, die Calciumverbindung enthaltende Gemisch mit Hilfe einer Mühle zerkleinert wird.

Beim erfindungsgemäßen Verfahren bewirkt die Vermischung mit dem Sand im ersten Schritt die Aufhebung der Zähigkeit der in teerartiger Form vorliegenden Phosphorsäure durch Auflockerung ihrer makroskopischen Struktur.

Beim Verfahren gemäß der Erfindung erfolgt die Neutralisation nach Untermischen des Sandes erleichtert, wobei unter Verwendung billiger Neutralisationsmittel (Kalk, Kalkstein) Calciumphosphat mit Füllmaterial Sand erhalten wird. Da beide Stoffe des Neutralisats in Form von Rohphosphat und Kies Einsatzkomponenten für den elektrothermischen Phosphorofen darstellen, kann das zerkleinerte Neutralisat dem feinteiligen Rohphosphat zur Herstellung von Formlingen bzw. Sinterkörpern als Einsatzgut für den Phosphorofen zugemischt werden.

Beim erfindungsgemäßen Verfahren kann das abgekühlte, die Calciumverbindung enthaltende Gemisch auch mit Hilfe eines Brechers, insbesondere eines Backenbrechers, zerkleinert werden.

Im Rahmen des erfindungsgemäßen Verfahrens ist unter konzentrierter Phosphorsäure eine Phosphorsäure mit mehr als 50 Gewichts% $H_3PO_4$ ($\hat{=}$, 36,2 Gewichts% $P_2O_5$) zu verstehen.

Beispiel 1 (Vergleichsbeispiel)

2,5 kg verunreinigte Phosphorsäure (ca. 15 Gewichts% $C_{org}$; etwa 50 Gewichts% $P_2O_5$) wurden mit 1 kg Sand (Körnung: 0,3 bis 0,8 mm) 10 Minuten verknetet und nach Zusatz von 850 g CaO weitere 50 Minuten geknetet. Das resultierende Gemisch war so hoch viskos, daß es weder gebrochen noch gemahlen werden konnte.

Beispiel 2 (gemäß der Erfindung)

2,5 kg verunreinigte Phosphorsäure (ca. 15 Gewichts% $C_{org}$; etwa 50 Gewichts% $P_2O_5$) wurden mit 2,5 kg Sand (Körnung; 0,3 bis 0,8 mm) 10 Minuten verknetet. Nach Zugabe von 850 g Calciumoxid wurde 50 Minuten weiter geknetet. Das Neutralisat wurde zum Erkalten aus dem Kneter ausgetragen; seine 10 %ige wäßrige Aufschlämmung wies einen pH-Wert von 9,0 auf. Das erkaltete Neutralisat wurde durch weiteres Kneten im Laufe von 20 Minuten auf Korngrößen von weniger als 5 cm zerkleinert.

Beispiel 3 (gemäß der Erfindung)

Beispiel 2 wurde mit der Änderung wiederholt, daß mit 1100 g Calciumhydroxid neutralisiert wurde. Dabei wies die 10 %ige wäßrige Aufschlämmung des erkalteten Neutralisates einen pH-Wert von 8,5 auf. Das erkaltete Neutralisat ließ sich ohne Schwierigkeiten in einem Backenbrecher auf Korngrößen von weniger als 1 cm zerkleinern.

Beispiel 4 (gemäß der Erfindung)

Beispiel 2 wurde mit der Änderung wiederholt, daß mit 1500 g Calciumcarbonat neutralisiert wurde. Dabei wies die 10 %ige wäßrige Aufschlämmung des erkalteten Neutralisates einen pH-Wert von 8,0 auf. Das erkaltete Neutralisat ließ sich ohne Schwierigkeiten in einer Mühle auf Korngrößen von weniger als 1 mm aufmahlen.

**Ansprüche**

1. Verfahren zur Aufarbeitung von konzentrierter, mit organischen Bestandteilen verunreinigter, vorzugsweise teilweise kondensierter Phosphorsäure, dadurch gekennzeichnet, daß man die Phosphorsäure mit feinkörnigem Sand im Gewichtsverhältnis (0,5 bis 1,5) : 1 intensiv vermischt; daß man dem resultierenden Gemisch zu seiner Neutralisation soviel einer basischen, sauerstoffhaltigen Calciumverbindung unter Fortsetzung der intensiven Vermischung zusetzt, bis eine 10 %ige wäßrige Aufschlämmung des mit der Calciumverbindung versetzten Gemisches einen pH-Wert zwischen 5 und 11 aufweist, und daß man das die Calciumverbindung enthaltende Gemisch nach seinem Abkühlen zerkleinert.

2. Verfahren nach Anspruch 1, dadurch gekennzeichnet, daß der Sand eine Korngröße von weniger als 1 mm aufweist.

3. Verfahren nach Anspruch 2, dadurch gekennzeichnet, daß die Korngröße des Sandes 0,3 bis 0,8 mm beträgt.

4. Verfahren nach mindestens einem der Ansprüche 1 bis 3, dadurch gekennzeichnet, daß das Gewichtsverhältnis von Phosphorsäure zu Sand (0,9 bis 1,1) : 1 beträgt.

5. Verfahren nach mindestens einem der Ansprüche 1 bis 4, dadurch gekennzeichnet, daß der pH-Wert der 10 %igen wäßrigen Aufschlämmung des mit der Calciumverbindung versetzten Gemisches 6 bis 8 beträgt.

6. Verfahren nach mindestens einem der Ansprüche 1 bis 5, dadurch gekennzeichnet, daß als calciumhaltige Verbindung Calciumoxid dient.

7. Verfahren nach mindestens einem der Ansprüche 1 bis 5, dadurch gekennzeichnet, daß als calciumhaltige Verbindung Calciumcarbonat dient.

8. Verfahren nach mindestens einem der Ansprüche 1 bis 7, dadurch gekennzeichnet; daß die Vermischung in einem Kneter vorgenommen wird.

9. Verfahren nach mindestens einem der Ansprüche 1 bis 8, dadurch gekennzeichnet, daß das abgekühlte, die Calciumverbindung enthaltende Gemisch in einem Kneter zerkleinert wird.

10. Verfahren nach mindestens einem der Ansprüche 1 bis 8, dadurch gekennzeichnet, daß das abgekühlte, die Calciumverbindung enthaltende Gemisch mit Hilfe einer Mühle zerkleinert wird.